# FASCICULE DE BREVET EUROPEEN

(11) **EP 0 407 314 B1**
(45) Date de publication et mention de la délivrance du brevet: **12.06.1996**
(21) Numéro de dépôt: 90420313.0
(22) Date de dépôt: 04.07.1990
(51) Int. Cl.: B32B 15/08, B21D 22/20, C10M 111/00, B65D 83/14

(54) **Bande ou portion de bande pour emboutissage ou emboutissage-étirage et son utilisation**
Rand oder Teil einer Einfassung zum Tiefziehen oder Tiefziehen-Streckziehen und dessen Gebrauch
Band or part of a rim for a draw-and-redraw-process and its use

(30) Priorité: 06.07.1989 FR 8909453
(43) Date de publication de la demande: 09.01.1991
(73) Titulaire: CEBAL S.A., F-92115 Clichy (FR)
(72) Inventeur: Bosc, Richard, F-38340 Voreppe (FR); Brugerolle, Pierre, F-51800 Ste Menehould (FR); Jupin, Alain, F-51800 Ste Menehould (FR); Layre, René, F-38100 Grenoble (FR)
(74) Mandataire: Vanlaer, Marcel

(56) Documents cités:
- EP-A- 0 234 774
- EP-A- 0 354 857
- EP-A- 0 407 313
- WO-A-81/01375
- DE-A- 3 335 150

## Description

L'invention concerne des bandes multicouche à base d'aluminium ou d'alliage d'aluminium pour emboutissage-étirage profond selon le préambule de la revendication 1 ainsi que des emboutis et des récipients obtenus à partir de ces bandes.

La demande de brevet GB-A-2 003 415 décrit un procédé d'emboutissage-étirage d'une bande d'aluminium ayant au moins une face recouverte de film plastique et l'autre recouverte soit de film plastique , soit de vernis cuit de façon partielle, pour fabriquer des boîtes boisson ou des boîtes de conserve dont le film plastique est à l'extérieur. Les récipients obtenus donnés en exemple ont un rapport hauteur/diamètre d'environ 2.

La demande de brevet WO 81/01375 décrit par ailleurs le dépôt sur un substrat quelconque d'une couche de laque à base de polyimide et contenant des particules solides autolubrifiantes finement dispersées. Cette couche a des propriétés tribologiques pouvant favoriser les contacts glissants ou encore pouvant conduire à des efforts de frottement limités. Prévue très épaisse, coûteuse à préparer car un mélange intime "laque + poudre finement dispersée" est nécessaire, un telle couche n'a pas pu être utilisée industriellement sur des tôles destinées à subir un emboutissage-étirage profond.

La demanderesse a cherché à obtenir des corps creux emboutis ou emboutis-étirés en alliage d'aluminium de plus grande hauteur, pour la fabrication de boîtiers aérosols. La fabrication de tels boîtiers, pouvant avoir un rapport H/D (="hauteur/diamètre") de 3 à 4, comprend typiquement le filage par choc d'un pion d'alliage d'aluminium suivi de divers traitements de surface, revêtements et traitements de cuisson, puis de la décoration et de la conification avec roulage du bord pour la fixation d'une valve, et la demanderesse a cherché aussi à simplifier les opérations ou traitements succédant à la conformation du boîtier.

Le premier objet de l'invention est une bande ou portion de bande pour emboutissage ou emboutissage-étirage utilisant un ou plusieurs outillages externes de conformation, comportant une couche métallique portant sur une de ses faces une couche de vernis cuit contenant un lubrifiant solide en particules caractérisé en ce que:
a) ladite couche métallique est en alliage d'aluminium et comporte sur chaque face une couche d'adhérence d'oxyde anodique ou de conversion chimique d'épaisseur comprise entre 20 nm et 80 nm;
b) lesdites particules sont plus dures que le vernis et moins dures que le ou lesdits outillages externes, et le rapport "diamètre moyen de ces particules / épaisseur du vernis" est supérieur à 1;
c) ladite couche métallique porte sur son autre face pourvue de ladite couche d'adhérence une couche superficielle de matière plastique.

La bande ou portion de bande de l'invention est particulièrement étonnante d'abord par le comportement de sa face vernie à l'emboutissage puis à l'étirage : grâce à l'action des particules solides présentes dans le vernis situé sur la surface externe de l'embouti et plus précisément grâce à l'affleurement de certaines de ces particules, cette surface externe est en quelque sorte "auto-lubrifiée" et on peut supprimer le lubrifiant visqueux habituellemnt utilisé, en arrosant de préférence les surfaces travaillantes par de l'eau dans le cas d'une fabrication de série. L'eau a alors un triple rôle : refroidissement des outillages, évacuation des particules solides détachées pendant l'opération, et amélioration des glissements pièce/outillages. La suppression du lubrifiant traditionnel a dans le cas général des conséquences considérables sur l'économie de la fabrication de corps creux tels que des boîtiers du type aérosol, aussi bien par la suppression des lubrifiants et de leur retraitement que par la suppression des opérations de dégraissage et de traitement thermique qu'ils rendent obligatoires.

Du côté de l'intérieur de l'embouti, la couche superficielle de matière plastique est parfaitement adhérente comme le vernis à l'âme en alliage d'Al grâce aux couches d'oxyde anodique ou de conversion chimique présentes sur les faces de cette âme. Elle reste étanche pendant les déformations et jouera le rôle de barrière vis-à-vis du contenu ou agent agressif intérieur, de sorte que l'opération de vernissage intérieur peut être supprimée. Vis-à-vis du poinçon d'emboutissage, cette couche de matière plastique évite tout grippage métal sur métal, et en combinaison avec le vernis extérieur, dans lequel on a remarqué (exemple 4) que les particules solides allaient jusqu'à jouer un "rôle lubrifiant sacrificiel" au cours des opérations de conformation successives, elle permet d'atteindre en emboutissage-étirage des rapports "hauteur sur diamètre" (H/D) particulièrement élevés.

Dans la suite de cette description, on désignera par "bande Al" la bande ou portions de bande d'aluminium ou d'alliage d'aluminium traitée en surface selon l'invention ; de même "bande multicouches" désignera la bande Al revêtue selon l'invention de vernis avec lubrifiant solide sur une face correspondant à l'extérieur de l'emballage et d'une couche de matière plastique sur l'autre face correspondant à l'intérieur de l'emballage.

Les alliages d'aluminium convenant selon l'invention sont ceux habituellement utilisés dans le domaine des corps creux pour l'emballage tels que boîtiers, aérosols, boîtes pour l'industrie agroalimentaire, capsules de bouchage. Des alliages tels que ceux de la série 3000 par exemple le 3004, ceux de la série 5000, par exemple le 5052 conviennent ; ces désignations d'alliage correspondent aux normes de l'Aluminium Association. Il faut remarquer que l'excellente aptitude à l'emboutissage-étirage de la bande multi-couche de l'invention permet d'y inclure une bande d'alliage d'Al moins performant à cet égard, le problème des arrachements de surface ("galling") à l'étirage étant résolu par les particules lubrifiantes de la couche externe.

Des traitements de surface de l'aluminium parmi lesquels on peut citer l'anodisation, la conversion chimique sont connus pour améliorer l'adhérence des polymères, des adhésifs et des vernis sur la bande Al.

La demanderesse a trouvé que, parmi le grand nombre de possibilités de traitements de surface, certaines conditions particulières permettaient de développer l'adhérence nécessaire pour réaliser l'invention, à savoir une oxydation anodique des deux faces de la bande Al, en présence d'acide phosphorique et conduisant à une couche anodique d'épaisseur comprise entre 30 nm et 80 nm et de préférence entre 40 et 80 nm. On peut aussi réaliser un traitement de conversion chimique phosphochromique conduisant à une couche d'épaisseur comprise entre 20 et 60 nm. La demanderesse, tout en accordant une préférence à l'oxydation anodique, a observé que l'adhérence était optimum avec les épaisseurs de couche et la nature de traitements tels que définis précédemment.

Selon l'invention, la face de la bande Al correspondant à l'extérieur de l'emboutissage est revêtue d'un vernis contenant un lubrifiant solide constitué de particules micronisées.

La demanderesse a trouvé qu'il était possible d'utiliser les vernis habituellement mis en oeuvre dans la fabrication de corps creux pour l'emballage, tels que vernis époxy-phénolique, époxy-urée, organosol vinylique, polyester, acrylique, avec une épaisseur de vernis sec sur la bande Al comprise entre 1 et 8 µm et de préférence entre 2 et 5 µm. Ces vernis contiennent selon l'invention de 0,1 à 10% en poids par rapport au poids du vernis sec de lubrifiant solide constitué de particules micronisées de diamètre moyen compris entre 1 et 30 µm, et de préférence compris entre 2 et 20 µm, et de préférence encore compris entre 10 et 20 µm, le diamètre moyen correspondant à la moyenne des plus grandes dimensions de ces particules qui ne sont pas nécessairement sphériques. De préférence, le vernis contient de 0,5 à 5% en poids de lubrifiant solide.
Par convention dans la présente demande, un lubrifiant solide est une matière micronisée, insoluble ou peu soluble dans le vernis,de point de ramollissement supérieur à 60°C constituée de particules plus dures que les vernis et moins dures que l'outillage de conformation. Ces particules discrètes fournissent des points de contact avec les outils extérieurs et ont par suite un rôle anti-friction.

On peut ainsi utiliser comme lubrifiant solide des particules micronisées de matières plastiques telles que le PE, le PP, le PTFE, de matière organique non polymérisée telle que des amides d'acide gras; on peut utiliser des mélanges de particules différents par la taille et/ou la nature chimique. Les particules de PE et de PP ne s'étaient pas durant les conformations, celles de PE ont typiquement une masse moléculaire en poids supérieure à 100 000.

Ces particules solides ont un diamètre moyen choisi de préférence en relation avec l'épaisseur de la couche de vernis sec: ce diamètre moyen doit être supérieur à 1 et de préférence compris entre 1 fois et 10 fois l'épaisseur de la couche de vernis sec et de préférence encore compris entre 4 et 10 fois cette épaisseur. Ainsi, de façon très surprenante, des particules de lubrifiant solide de diamètre moyen 10 à 20 µm ont donné des résultats remarquables dans une couche de vernis d'épaisseur 2 µm à l'état sec, les efforts d'emboutissage et d'étirage étant alors fortement diminués.
Le vernis peut contenir, outre le lubrifiant solide, d'autres charges telles que des matières colorantes, par exemple 1 à 5% de pigment blanc à base d'oxyde de titane, cette limitation à moins de 5% étant faite alors pour ne pas compromettre la ductilité du vernis additionné de pigment. Dans le cas d'un distributeur dont la surface doit être décorée, la couleur même pâle obtenue avec ce pigment sur le récipient ou boîtier embouti-étiré permettra d'utiliser comme base de décor une couche moins dense et demandant un traitement thermique à température plus faible et/ou moins long. Les simplifications correspondantes des équipements et de la fabrication concernent par exemple le cas des distributeurs ayant comme base de décor un couché blanc.

La cuisson de la couche de vernis chargé de lubrifiant solide est effectuée dans des conditions de température et de durée, généralement entre 120 et 250° pour des durées pouvant aller de 15 secondes à 15 minutes, permettant la cuisson totale et le développement de l'adhérence maximum.

Dans la bande multicouche de l'invention, la couche superficielle de matière plastique recouvrant sa face correspondant à l'intérieur de l'emboutissage a une épaisseur comprise entre 15 et 100 µm et de préférence entre 30 et 60 µm, adhérant à la bande et constituant une barrière inerte entre l'aluminium et le contenu éventuellement agressif du corps creux. Ce film a de préférence un taux d'allongement supérieur à 200% dans toutes les directions (sens long et travers).

Selon une première modalité de l'invention, un adhésif est utilisé pour faire adhérer ladite couche superficielle de matière plastique à la bande Al. Cet adhésif est appliqué en couche de 0,5 à 10 µm d'épaisseur et de préférence de 2 à 4 µm d'épaisseur et la couche superficielle ou film de matière plastique est en polyoléfine telle que le polyéthylène (PE), en particulier le PE-HD, le polypropylène (PP), un copolymère de PE et de PP, un copolymère de PE ou de PP avec une autre oléfine, ce film ayant une épaisseur comprise entre 20 et 80 µm et de préférence entre 30 et 60 µm, et ayant un taux d'allongement supérieur à 200% dans le sens long et dans le sens travers. Les adhésifs polyuréthane conviennent.
L'application de l'adhésif peut être réalisée par enduction de la bande Al préchauffée au-dessus de 50°C. Si l'adhésif contient des solvants, ceux-ci sont éliminés, après enduction par tout moyen connu tel que passage dans une étuve, et avant application du film de matière plastique. Si l'adhésif ne contient pas de solvant, il est préchauffé de façon à avoir une fluidité permettant son application. L'épaisseur d'adhésif est choisi de façon à ce qu'il n'y ait pas de partie de bande sans adhésif ; en effet, l'emploi de bande de grande longueur augmente les risques de non planéité ou d'irrégularité dimensionnelle de la bande en particulier en épaisseur dans le sens travers ; c'est donc aussi en fonction de la régularité et planéité de la bande Al que l'épaisseur d'adhésif est choisie.
Le film de polyoléfine est appliqué sur la bande Al enduite d'adhésif et préchauffée à une température supérieure à 50°C et pouvant atteindre la température de fusion du film; de manière connue, cette application peut être réalisée en faisant passer entre deux rouleaux presseurs l'un éventuellement chauffé, l'autre pouvant être recouvert de PTFE, la bande d'Al enduite d'adhésif et le film de polyoléfine, l'expression "bande Al" désignant soit la bande continue généralement sous forme de bobine, soit la portion de bande ou format.

Le film de polyoléfine peut contenir des additifs ou des charges habituellement choisies pour conférer un aspect particulier, telles que colorants solubles ou pigments qu'ils soient minéraux ou organiques, ou pour conférer des propriétés tribologiques par exemple de 0,1 à 0,5% en poids d'éthylène bistéaramide. Il peut aussi subir un traitement de surface, tel un traitement Corona renforçant l'adhérence à l'interface adhésif-film, ou tel une fluoration de surface conférant à la face externe du film une hydrophobie et une oléophobe de surface facilitant la mise en forme de la bande multicouche en corps creux profonds et limitant les interactions éventuelles entre le côté intérieur de l'emballage et le contenu de l'emballage.

Selon une deuxième modalité de l'invention, l'adhésif est un mélange en général extrudable d'au moins 50% en poids d'un copolymère acide et de au plus 50% en poids de polyoléfine, d'épaisseur comprise entre 2 et 10 µm et de préférence entre 4 et 8 µm ; le film de matière plastique, lié à la bande Al par cette couche d'adhésif est un mélange d'au moins 50% en poids de polyoléfine et d'au plus 50% en poids de copolymère acide, d'épaisseur comprise entre 20 et 80 µm et de préférence entre 30 et 60 µm.
On appelle copolymère acide des adhésifs extrudables, capables de faire adhérer un film de polyoléfine à une bande d'Al, adhésifs qui sont généralement obtenus par copolymérisation d'oléfines, d'acides ou d'anhydrides organiques et éventuellement d'esters insaturés. On peut citer à titre d'exemple de copolymères acides ceux vendus sous les marques commerciales suivantes : PRIMACOR, HERCOPRIME, LOTADER, OREVAC.

La demanderesse a trouvé que les bandes multicouche obtenues selon cette seconde modalité avaient un meilleur comportement à l'emboutissage-étirage sévère et en utilisation que les bandes multicouche comportant des couches de copolymères acides et de polyoléfines extrudées non mélangées. Selon une variante , il peut être avantageux de passer d'un revêtement à 2 couches (adhésif + couche superficielle) à un revêtement à 3 couches ou plus, d'adhérence améliorée, ayant une couche de liaison à plus de 50% de copolymère acide du côté de la bande Al, une couche intermédiaire à 45 à 55% de copolymère acide avec le complément de polyoléfine, et une couche externe à base de polyoléfine. Selon une autre variante, on peut aussi utiliser la coextrusion à 3 couches ou plus pour améliorer son effet barrière, par exemple avec une couche intermédiaire de 3 à 10 µm en PVDC ou en EVOH, liée à la bande Al et à la couche externe en polyoléfine par des couches adhésives.

La mise en oeuvre de la seconde modalité de l'invention est réalisée de préférence par coextrusion de toutes les couches simultanément, plutôt que par extrusion couche par couche.
La coextrusion simultanée des couches peut être mise en oeuvre directement sur la bande Al, en bobine, préchauffée avant coextrusion. Il est également possible de coextruder simultanément les couches de façon à obtenir dans un premier temps un film multicouche et, dans un deuxième temps, de faire adhérer ce film multicouche sur la bande Al en faisant passer entre deux cylindres presseurs, éventuellement chauffés et revêtus comme dans la première modalité de l'invention, la bande Al préchauffée et le film multicouche, la face adhésive de ce film étant du côté de la bande Al.
La coextrusion permet l'incorporation d'additifs ou de charges, telles que matières colorantes et agents de glissement respectivement dans la couche intermédiaire et dans une couche superficielle transparente dans le cas d'une coextrusion simultanée de 3 couches.

Selon une troisième modalité de l'invention, on applique, en exerçant une pression, le film de polyoléfine sur la bande Al préchauffée à une température permettant la fusion du film, au moins sur la partie du film en contact avec la bande Al, ce qui est réalisé par calandrage, suivi éventuellement du refroidissement rapide de la bande Al ainsi revêtue. Avantageusement, on soumet le film de polyoléfine à un traitement Corona avant application. Le PE linéaire basse densité convient pour cette modalité.

Le deuxième objet de l'invention est l'utilisation d'une bande ou portion de bande multicouches obtenue selon l'invention pour fabriquer un récipient par emboutissage seul ou typiquement par emboutissage-étirage de ladite bande ou portion de bande, sa couche externe de vernis contenant un lubrifiant solide en particules étant placée à l'extérieur du récipient. On peut obtenir ainsi des récipients profonds, dont le rapport H/D défini précédemment est typiquement supérieur à 2,5 et encore plus typiquement compris entre 3 et 5. Un tel rapport H/D dépasse le rapport H/D des boîts de conserves et des boîtes boisson du commerce, ce rapport étant en général inférieur à 2. Les récipients obtenus sont habituellement décorés.

Cette utilisation comporte typiquement une première étape d'emboutissage-étirage de la bande multicouche qui utilise les équipements industriels habituels mais sans nécessiter de lubrifiant externe. Il peut être nécessaire de refroidir les outils, en particulier les bagues d'étirage, ce qui est fait selon l'invention par aspersion d'eau additionnée d'une faible quantité de tensio-actif de façon à favoriser le mouillage des outils et de la bande multicouche à n'importe quel stade de sa mise en forme. Les tensio-actifs peuvent être anioniques, cationiques ou neutres à base d'oxyde d'éthylène et sont utilisés de 0,01 à 3% en poids par rapport à l'eau et de préférence de 0,05 à 0,5% de façon à abaisser la tension superficielle de l'eau au-dessous de 30 10⁻³ N.m⁻¹. Les tensio-actifs comportant des chaînes ou groupements fluorés, tels ceux vendus par la société ATOCHEM sous la marque déposée "FORAFAC" sont particulièrement efficaces.

L'emboutissage-étirage est suivi avantageusement d'une étape de décoration par impression, qu'il est possible de réaliser directement sur le vernis extérieur tel qu'obtenu à l'issue de l'emboutissage-étirage. Le vernis bien que soumis directement à de fortes contraintes mécaniques par les bagues d'étirage continue a adhérer remarquablement au métal et constitue donc un support de qualité pour l'application par impression ou enductions des divers éléments d'un décor, qu'il s'agisse des couchés blancs, des encres ou des vernis de surimpression, suivie d'une cuisson par traitement thermique ou éventuellement par irradiation (lumière UV ou faisceaux d'électrons). Compte tenu des traitements thermiques souvent utilisés pour cuire les impressions, comptenu aussi de la finesse des décors, qui peuvent avoir des portions d'aspect métallique par mise à nu de la couche d'aluminium, il est recommandé d'avoir un récipient dont l'extérieur est recouvert d'une couche de vernis de faible épaisseur plutôt que d'un film plastique, un tel film étant moins stable thermiquement qu'un vernis totalement cuit.

Des essais réalisés par la demanderesse ont montré le rôle essentiel du lubrifiant solide pour réaliser des récipients de H/D élevé vernis extérieurement par emboutissage-étirage.

La bande ou portion de bande de l'invention est avantageusement utilisée pour fabriquer des boîtes de conserves alimentaires ou des boîtes de conserves pour des boissons dites encore "boîtes boisson". Elle peut être aussi utilisée pour la fabrication d'autres éléments d'emballage emboutis-étirés, par exemple des capsules de bouchage ou de surbouchage.

Une utilisation particulièrement intéressante de la bande ou portion de bande de l'invention est la fabrication d'un boîtier du type aérosol de rapport H/D souvent supérieur ou égal à 2,5 et typiquement compris entre 3 et 5. Pour obtenir un distributeur d'aérosol ou un distributeur à pompe à partir d'un tel boîtier, on lui associe de préférence un dôme annulaire fixé de façon étanche à l'extrémité supérieure de ladite paroi latérale du boîtier. Ce dôme est en matière plastique et comporte un voile annulaire d'épaisseur minimale comprise entre 1,2 et 4 mm ainsi que deux portions annulaires inférieure et supérieure permettant la fixation de ce dôme respectivement sur ladite paroi latérale et à des moyens de distribution, lesdites portions de fixation prolongeant et encadrant ledit voile annulaire. Ce dôme en matière plastique est rigide et son épaisseur est choisie pour qu'il résiste à la fois aux chocs de manipulation et à la pression interne lorsqu'il s'agit d'un corps pour distributeur d'aérosol. Le dôme est en lui-même une pièce moulée simple à fabriquer et légère, sa forme épanouie à la base permet d'employer un boîtier dont l'extrémité supérieure est faiblement rétreinte en une portion annulaire habituellement droite, c'est-à-dire de génératrices de directions axiales, ou en une portion portant un bord roulé.

Par rapport au cas d'un boîtier métallique réalisé en une seule pièce avec rétreint en dôme de son extrémité supérieure, l'épaisseur de la paroi latérale d'un boîtier multicouche selon l'invention peut n'être que 0,5 fois à 0,65 fois ce qu'elle doit être dans ce cas connu d'un dôme monobloc rétreint pour résister à une pression donnée, ce qui est un résultat surprenant et d'un grand avantage économique.
Dans le cas d'un boîtier avec dôme rétreint de l'art antérieur, l'épaisseur de la paroi, ou tout au moins l'épaisseur de sa partie haute, est en effet prévue en fonction de la déformation avec rétreint, et cette épaisseur est alors typiquement 1,5 à 1,8 fois l'épaisseur qui serait nécessaire pour résister à la seule pression. Le rétreint faible de l'extrémité du boîtier dans le cas présent, permet d'éviter le supplément d'épaisseur ainsi lié à la déformation avec rétreint important et procure une économie de métal surprenante.
Ce rétreint de l'extrémité supérieure du boîtier correspond typiquement à une différence entre diamètre hors-tout du corps et diamètre intérieur de son ouverture supérieure rétreinte, comprise entre 4 mm et 12 mm, et l'épaisseur de la paroi latérale dont plus de 90% est de l'Al ou alliage, correspond comme suit au diamètre extérieur de cette paroi, les épaisseurs entre parenthèses concernant un corps tubulaire filé de l'art antérieur :
. 0 33 mm à < 47 mm : épaisseur 0,15 à 0,20 mm (0,30 à 0,35 mm)
. 0 47 mm à < 55 mm : épaisseur 0,20 à 0,25 mm (0,35 à 0,4 mm)
. 0 55 mm à 80 mm : épaisseur 0,25 à 0,35 mm (0,4 à 0,6 mm).

Le faible rétreint et l'économie de métal remarquable qui lui est associée sont des avantages considérables de la nouvelle structure des corps de distributeur et des distributeurs obtenus par l'invention. En outre, comme on le verra dans l'exemple 4, il peut y avoir sur la surface extérieure vernie du boîtier et donc au niveau de l'assemblage étanche de son rétreint en une portion droite et du dôme des petites zones de métal à nu, donnant des contacts locaux ou des voisinages matière plastique/métal qui sont beaucoup moins sujets à la corrosion que des contacts métal/métal, ceux-ci correspondant par exemple au sertissage connu de la capsule de fixation d'une valve sur un boîtier en fer blanc.

Le dôme en matière plastique est fixé de façon étanche sur l'extrémité supérieure du boîtier, selon des méthodes bien adaptées à la fabrication en série et relevant des principes suivants : collage, soudage d'une pièce de liaison, réalisation d'un verrou en matière plastique soit par injection à l'intérieur du bord roulé surmontant le corps tubulaire, soit par soudage par rotation (= par friction) d'une pièce en matière plastique emprisonnée par ledit bord roulé ; soudage par friction sur l'extrémité supérieure du boîtier .

Ces diverses méthodes et les dispositions qui en résultent seront illustrées par les exemples. On obtient ainsi, selon une variété de modalités d'exécution des corps de distributeurs dont les extrémités supérieures seront fixées de façon étanche à la coupelle de fixation de la valve ou de la pompe de distribution, typiquement par sertissage sur l'extrémité supérieure renflée extérieurement du dôme annulaire.
Le dôme annulaire est habituellement en l'une des matières du groupe formé par : les polyamides, les polycarbonates, les polyesters, le polyacétal, le polypropylène et le polyéthylène.

Pour satisfaire à l'impératif de résistance à la pression interne dans le cas des aérosols, par exemple une pression interne de 1,2 MPa, ou à celui de résistance à la dépression dans le cas de distributeurs équipés d'une pompe de préférence sans retour d'air, le voile annulaire du dôme annulaire a une épaisseur minimale de préférence comprise entre 1,5 et 3mm. Dans le cas d'un distributeur à pompe sans retour d'air, la tubulure ou orifice d'aspiration de la pompe doit être munie d'un tube plongeant jusque vers le fond du boîtier et le plein initial de liquide ou de crème dans le boîtier doit être au maximum de 75% du volume intérieur pour obtenir une distribution sans incident.

### AVANTAGES :

L'invention présente de nombreux avantages d'ordres technique et économique par rapport à ce qui est connu. Actuellement, les récipients profonds de H/D > 3 tels que boîtiers aérosols comportent typiquement une fabrication en 5 étapes :
a) de mise en forme par filage des pions ou emboutissage-étirage de bande Al nu
b) dégraissage et/ou de traitement thermique pour éliminer les lubrifiants et/ou traitement de surface pour avoir une surface externe/ interne apte à assurer l'accrochage de vernis à l'intérieur et de diverses couches d'un décor imprimé à l'extérieur
c) vernissage intérieur avec cuisson thermique du vernis
d) décoration par application de couchés blancs, d'encre, de vernis de surimpression avec cuisson
e) conification et mise en forme du bord adapté au mode de fermeture prévu.

Par rapport à ce procédé connu pour obtenir des récipients profonds de H/D > 3, le procédé selon l'invention présente les avantages suivants :
1) suppression totale des lubrifiants externes à l'emboutissage-étirage, ce qui est un avantage économique et aussi un avantage dans le domaine de l'hygiène, de la sécurité et du traitement des liquides résiduels, ces lubrifiants étant généralement des liquides de nature organiques, donc délicats à traiter ;
2) suppression de l'étape de dégraissage et/ou de celle de traitement thermique ou de traitement de surface ;
3) suppression de l'étape de vernissage intérieur et de la cuisson associée, car le récipient obtenu selon l'invention permet de conditionner des produits sans qu'il soit nécessaire de rajouter une couche de protection supplémentaire ;
4) choix possible de tout alliage d'Al adapté à l'emballage sans se trouver limité par un problème de "galling", c'est-à-dire d'arrachement de métal par les bagues d'étirage.
   Les économies d'équipement qui en résultent s'ajoutent aux économies de fabrication.
5) le rétreint de l'extrémité supérieure du boîtier multicouche de l'invention associé à un dôme annulaire en matière plastique selon cette même invention est faible, ce dôme faisant l'essentiel de la réduction entre diamètre extérieur du boîtier et diamètre de fixation de la valve ou pompe de distribution. Dans ce cas les avantages principaux sont :
   - une finition plus facile dudit boîtier ;
   - la possibilité de réduire fortement l'épaisseur de sa paroi latérale, typiquement de 35 à 50% relatif ;
   - une forte réduction des risques de corrosion à l'endroit de la fixation étanche dôme/boîtier ;
   - simplicité et fiabilité des méthodes d'assemblage des distributeurs.

### ESSAIS ET EXEMPLES :

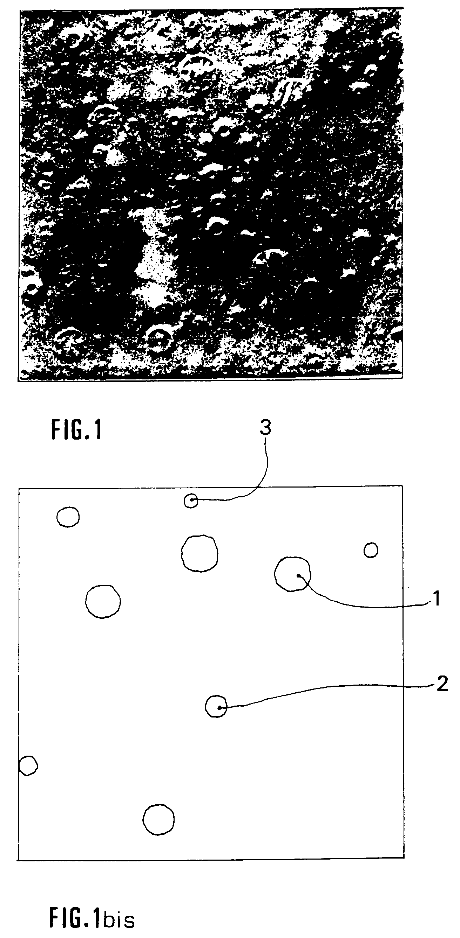

La figure 1 est une photographie à grossissement 500 d'une bande d'Al vernie selon l'invention, côté vernis.

La figure 1bis est un schéma reprenant les éléments essentiels de la figure 1.

La figure 2 représente en coupe une bande multicouche comprenant la bande d'Al vernie précédente.

La figure 3 représente en coupe une deuxième bande multicouche comprenant une portion de la même bande d'Al vernie.

Les figures 4 et 4bis représentent, de la même façon que les figures 1 et 1bis, la surface externe de la bande multicouche de la figure 2 après emboutissage.

Les figures 5 et 5bis représentent de façon semblable la surface externe de la même bande, après emboutissage et étirage.

La figure 6 représente un corps de distributeur selon l'invention, en coupe axiale.

La figure 7 représente un distributeur à pompe obtenu à partir d'un corps de distributeur du même type, en coupe axiale.

Les figures 8 à 10 représentent différents modes d'assemblage étanche du boîtier et du dôme du corps de distributeur, en demi-coupe axiale.

La figure 11 représente l'assemblage étanche d'un boîtier et d'un dôme, en demi-coupe axiale.

Les mêmes repères sont utilisés pour désigner des éléments semblables ayant la même fonction.

### EXEMPLE 1 :

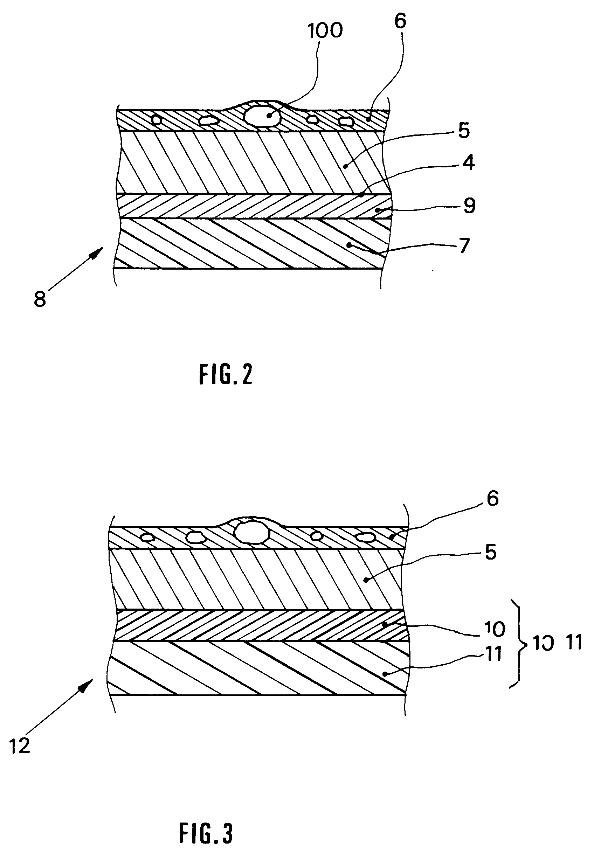

a) Préparation de la bande Al
   une bande en alliage d'aluminium 3004 à l'état H19 et ayant une épaisseur de 500 µm a été soumise sur ses deux faces à un dégraissage en présence d'acide phosphorique suivi d'une oxydation anodique phosphorique conduisant à une couche d'oxyde d'épaisseur 60 nm.
b) Préparation de la bande multicouche :
   1. dans un premier temps, vernissage de la face de la bande Al 5 destinée à devenir la face externe d'un emballage :
   on a appliqué par enduction sur une des deux faces de la bande Al 5 un mélange de vernis de type acrylique (vernis n°326412 de chez HOLDEN) et de 1,5% en poids de lubrifiant solide consistant en un mélange de particules PE/PTFE de taille ou diamètre moyen de 2,5 µm avec un maximum de 9 µm (référence TF 1778 de LANGER & CO), de façon à former, après cuisson complète du vernis 12 min. à 180°C, une couche de vernis sec 6 (Fig.2) d'épaisseur 2 µm.
   Typiquement la cuisson est réalisée entre 160 et 260°C et avec des durées allant de 15 s à 15 min., la cuisson à haute température associée à une durée courte nécessitant un traitement continu de la bande d'Al dans un four à bande, alors que la cuisson à plus basse température associée à une durée plus longue suppose en général le découpage préalable de la bande en portions de bande appelées formats.
   L'examen au M.E.B (microscope électronique à balayage) de la surface de vernis ici obtenue (figures 1 et 1 bis) montre un grand nombre de bosses ou protubérances généralement circulaires, par exemple les protubérances 1, 2 et 3 de diamètres respectifs 16, 10 et 6 µm, formant de légers reliefs à la surface du vernis et correspondant à la présence de particules 100 de lubrifiant solide schématisées sur la figure 2.
2. Dans un deuxième temps, on a revêtu l'autre face 4 de la bande d'Al 5 déjà revêtue de vernis 6 d'un film de PP (polypropylène) 7, obtenant ainsi une bande multicouche 8 selon l'invention (figure 2).
   Pour cela on a appliqué par enduction une couche d'adhésif polyuréthane de 3 µm référence 3640 de chez HENKEL, sur l'autre face 4 de la bande Al préchauffée vers 60°C. Après évaporation des solvants, on a appliqué le film 7 de PP de qualité "cast", d'épaisseur 50 µm et d'allongement 400 à 600 % dans toutes les directions par calandrage, en faisant circuler entre deux rouleaux la bande Al ainsi revêtue et le film de PP de façon à faire adhérer par pression le film PP à la couche d'adhésif. Un des deux rouleaux est chauffé, l'autre, en contact avec le film PP est revêtu de PTFE, n'adhérant pas au PP ou au PE même fondu.
   On a obtenu ainsi une bande multicouche destinée à être mise en forme.

### EXEMPLE 2 :

On a coextrudé avec une filière plate, sur la bande Al vernie sur l'autre face et préchauffée à 160°C, un complexe bi-couche 10+11 constitué de :
- une première couche 10 (côté métal) de 8 µm composée d'un mélange pondéral à 85% de copolymère acide à base de EAA (éthylène-acide acrylique) et de 15% de PE HD (polyéthylène haute densité). Cette couche 10 est destinée à assurer la liaison entre la couche anodique de l'alliage d'aluminium et la deuxième couche ;
- une deuxième couche 11 externe de 40 µm composée d'un mélange pondéral de 80% de PEHD et de 20% d'EAA, d'allongement 400 à 600% dans toutes les directions, obtenant ainsi une bande multicouche 12 selon l'invention (figure 3), ayant pour couches successives, la couche de vernis 6, la couche d'Al 5, la couche de liaison 10 et la couche superficielle de matière plastique ductile 11.

### EXEMPLE 3 :

Cet exemple se différencie de l'exemple 2 en ce que, au lieu d'extruder sur la bande Al un complexe multicouche, on a préparé à part un film complexe multicouche par extrusion annulaire, de même composition et épaisseur que celle décrite à l'exemple 2.
On a appliqué ensuite ce film par calandrage sur la bande Al vernie une fois préchauffée, de manière analogue à ce qui a été décrit dans l'exemple 1.

### EXEMPLE 4 :

Dans cet exemple, on décrit la mise en forme de la bande multicouche de l'exemple 1, le corps creux à obtenir ayant 47 mm de diamètre (D), et 160 mm de hauteur (H), soit un rapport H/D de 3,4.

La mise en forme de la bande multicouche a comporté une première étape d'emboutissage suivie d'une deuxième phase d'étirage, selon la gamme suivante :

| opération | D (diamètre) | H (hauteur) | épaisseur de jupe | H/D |
|---|---|---|---|---|
| Emboutissage | | | | |
| - découpe d'un flan circulaire | 127 mm | - | - | - |
| - 1ère passe | 65 mm | 45 mm | 0,55 mm | 0,7 |
| - 2ème passe | 47,6mm | 77 mm | 0,55 mm | 1,6 |

| Etirage | | | | |
|---|---|---|---|---|
| - 1ère bague | 47,4mm | 100 mm | 0,40 mm | 2,1 |
| - 2ème bague | 47,3mm | 115 mm | 0,35 mm | 2,4 |
| - 3ème bague | 47,0 | 160 mm | 0,25 mm | 3,4 |
| - mise à longueur uniforme | | | | |

Cette mise en forme pourrait être réalisée, en continu, à partir de la bande multicouche elle-même ou après découpage de celle-ci en portions de bandes ou formats.

L'étirage a été réalisé sous aspersion d'eau additionnée de 0,1% en poids d'agent tensio-actif FORAFAC (marque déposée), de manière à ce que l'eau mouille en particulier la surface externe de la cup obtenue après emboutissage, dans le triple but de refroidir les bagues d'étirage, de réduire les risques d'endommagement des surfaces internes et externes du corps creux, et d'éliminer les souillures éventuelles ou les résidus tels que les particules de lubrifiant solide qui ont été arrachées pendant l'étirage.

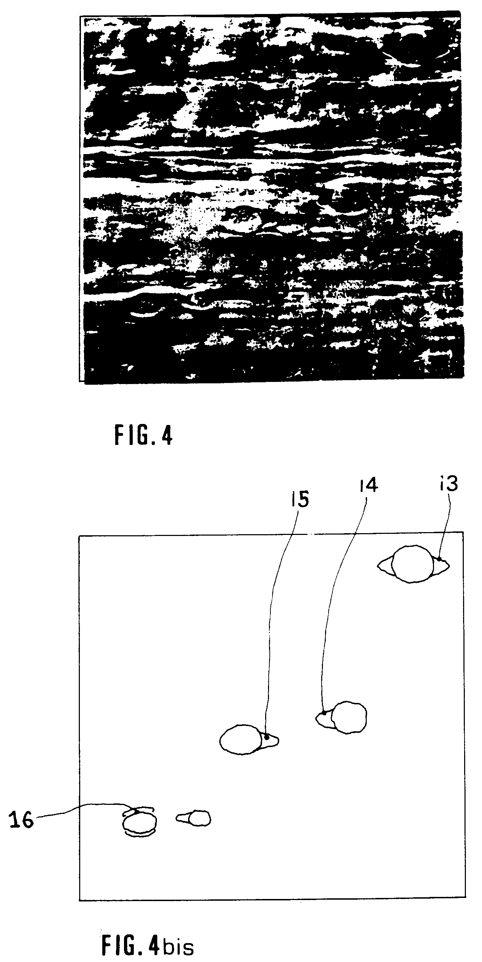

L'examen de la surface externe d'une pièce emboutie, mais non encore étirée, au M.E.B. à grossissement 500 comme pour la fig.1, a montré que les particules de lubrifiant solide étaient toujours présentes d'après les protubérances telles que 13, 14, 15 et 16 (figure 4 et figure 4bis reprenant les contours des protubérances ou reliefs), et qu'elles ont été peu ou pas déformées par l'emboutissage. On note cependant, une décohésion entre vernis et particule à l'avant et/ou l'arrière de certaines particules, correspondant par exemple aux reliefs 13, 14 et 15, c'est-à-dire à des particules en général les plus grosses. Ces lâchages en V sont orientés selon la direction axiale de l'emboutissage.

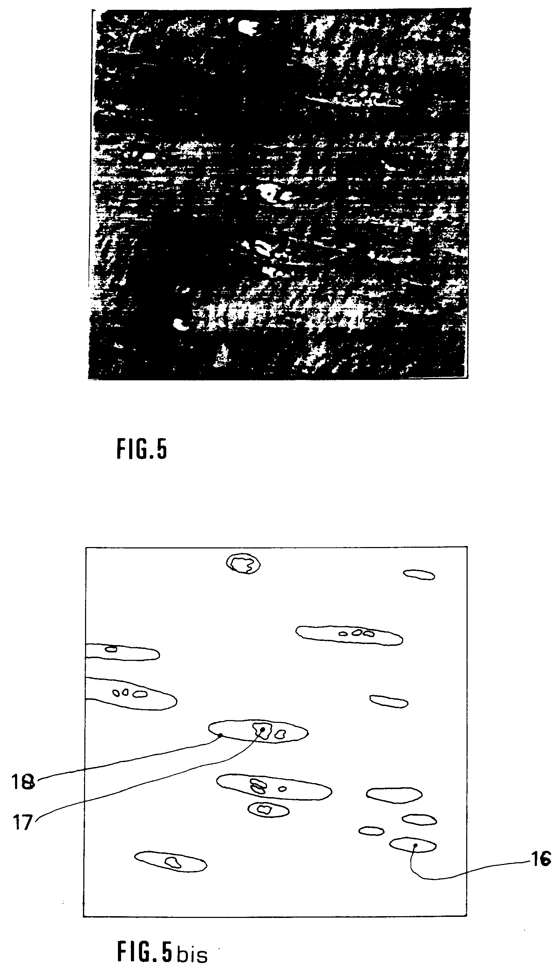

L'examen au microscope (Fig.5) de la même surface externe de la jupe à l'issue de l'étirage montre que la majorité sinon la totalité des particules de lubrifiant solide a disparu de la surface externe de la jupe qui a été soumise à l'étirage, on observe seulement les traces en creux laissées dans le vernis par ces particules plus dures que le vernis sous forme d'ellipses très allongées et de dimensions diverses (voir figure 5 bis sur laquelle quelques traces 16 et 17 ont été marquées pour faciliter leur repérage). On observe aussi que le vernis, bien que d'épaisseur finale très faible, est resté adhérent au métal on note cependant parfois, au sein de traces elliptiques, telles que 16, de petites zones 18 de métal à nu (on évalue à moins de 1% la surface ainsi mise à nu) qui semblent correspondre à des zones de tangence ou de presque tangence des plus grosses particules avec le métal, zones découvertes par l'arrachage de telles particules.

Ainsi, les particules de lubrifiant solide se comportent comme des particules lubrifiantes "sacrificielles" qui sont progressivement éliminées lors de l'étirage :
les plus grosses d'abord, les plus petites à la fin de l'étirage.

A l'examen visuel, la surface interne présente un aspect uniforme. Des tests de conductivité électrique, dits "test WACO", qui permettent de mesurer le degré d'endommagement d'un revêtement intérieur en mesurant à tension constante l'intensité de courant passant entre un corps creux métallique, son contenu à base de solution saline et une électrode centrale, ont été effectués sur des échantillons en fin d'emboutissage et après chaque passe d'étirage (Tableau 1) :

**TABLEAU 1**

| Corps creux D X H | Hauteur de remplissage (en solution NaCl à 20%) | Intensité (sous 6,3 Volts) |
|---|---|---|
| 47,6 x 77 | 50 mm | 0 mA |
| 47,4 x 100 | 80 mm | 0 mA |
| 47,3 x 100 | 80 mm | 0,5 mA |
| 47 x 160 | 120 mm | 1 mA |

Compte tenu des surfaces testées, on considère comme acceptable des valeurs d'intensité inférieures à 5 mA.
Les valeurs d'intensité obtenues illustrent bien la faible porosité obtenue après la mise en forme, de sorte que, telle quelle, cette surface interne est adaptée au conditionnement de produits même agressifs, sans nécessiter un traitement complémentaire.

### EXEMPLE 5 :

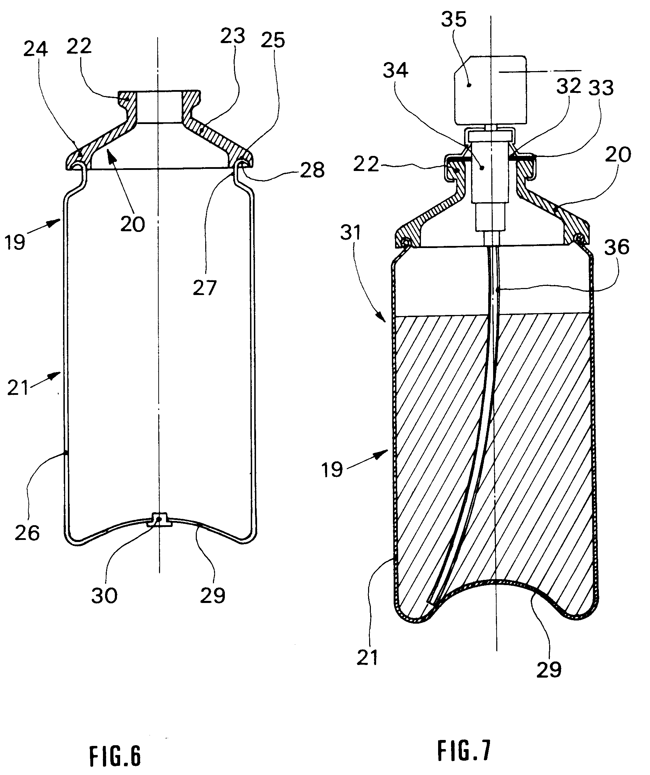

La pièce (dôme + boîtier) 19 ou corps de distributeur 19 de la figure 6 comprend un dôme 20 en polyéthylène haute densité (PE.HD) et un boîtier multicouche 21 obtenu par la gamme d'emboutissage-étirage de l'exemple 4 suivie d'opérations de préparation de son extrémité supérieure.
Le dôme 20 comprend à son extrémité supérieure un renflement extérieur 22 de diamètre extérieur 20 mm constituant une bague de sertissage des moyens de distribution. Il comprend encore au-dessous de cette bague 22 un voile 23 d'épaisseur 2,3 mm sensiblement constante puis une portion circulaire inférieure élargie 24, de diamètre extérieur 45 mm et de diamètre intérieur 39 mm, comportant à son extrémité une gorge circulaire ouverte 25 de profil hémi-circulaire de rayon 1,5 mm en section axiale et de diamètre moyen 42 mm. La hauteur totale du dôme 20 est de 18 mm.
Le boîtier 21 a une épaisseur de corps cylindrique 26 de 0,25mm et une ouverture 27 rétreinte de diamètre 36,5 mm surmontée d'un bord extérieur 28 sur environ 150° de rayon extérieur 1,3mm. La fixation du dôme 20 au bord roulé 28 a été faite par oxydation de surface de la gorge circulaire 25 du dôme 20 (traitement Corona) et collage à la colle cyanoacrylate de cette gorge 25 emboîtée sur le bord roulé 28 et maintenue en appui 15 secondes pendant le séchage de la colle. La technique de collage employée résulte d'essais ; les colles au cyanoacrylate ont été trouvées bien préférables aux colles au silicone pour l'application industrielle, les temps de pressage et surtout de séchage étant excessifs avec ces dernières. Des colles en polyuréthane ont également donné satisfaction.
D'autres méthodes connues de traitement de surface de la gorge en matière plastique 25 peuvent être employées, par exemple un traitement à la flamme ou avec une électrode de forme (effet Corona).

Le boîtier 21 est ici destiné à une application aérosol et son fond monobloc 29 comporte un orifice d'introduction d'un gaz propulseur sous pression et un bouchon 30 de bouchage étanche de cet orifice.

### EXEMPLE 6 :

Un corps de distributeur 19, identique au corps 19 de la figure 6 à l'exception du fond 29 de son boîtier 21 qui est étanche, a été utilisé pour fabriquer un distributeur à pompe 31 (figure 7). On a pour cela serti avec un joint d'étanchéité 32 la coupelle métallique de fixation 33 de la pompe 34, qui est ici surmontée d'un diffuseur 35, sur l'extrémité supérieure renflée 22 du dôme 20. Cette pompe 34 est une pompe sans retour d'air, c'est-à-dire sans communication entre l'intérieur et l'extérieur du récipient comme connu par les documents EP-A-0143183 et EP-A-60251863, ce qui permet une bonne conservation du produit contenu. Pour obtenir une distribution satisfaisante du liquide ou de la crème qui est contenue dans le distributeur, la tubulure d'entrée de la pompe 34 est munie d'un tube plongeur 36 descendant jusque vers le fond 29 du boîtier 21, le plein initial du produit contenu étant limité à 70% du volume intérieur.

En effet, des essais ont montré que, avec des pleins de 80% et plus, les pompes sans retour d'air utilisées ne fonctionnent pas de façon satisfaisante , et que avec des pleins de 70%, le fonctionnement était toujours satisfaisant. Ces essais permettent de conclure qu'un maximum de remplissage de 75% doit être respecté dans le champ d'application de la présente invention (capacités typiquement inférieures à 1 litre) pour obtenir des distributions sans incident, les remplissages préférés étant de 60 à 75%.

### EXEMPLE 6bis :

Un autre corps de distributeur, identique au corps 19 du deuxième exemple est utilisé pour obtenir un distributeur de produit aérosol selon la modification suivante (fig.7) : la pompe 34 est remplacée par une valve pour aérosol fixée sur l'extrémité renflée 22 du dôme 20 par sertissage de sa coupelle de fixation qui est semblable à la coupelle 33 de la pompe. Le corps de distributeur 19 peut ainsi avoir, tel qu'il est, deux types d'usage.

### EXEMPLES 7 à 9 :

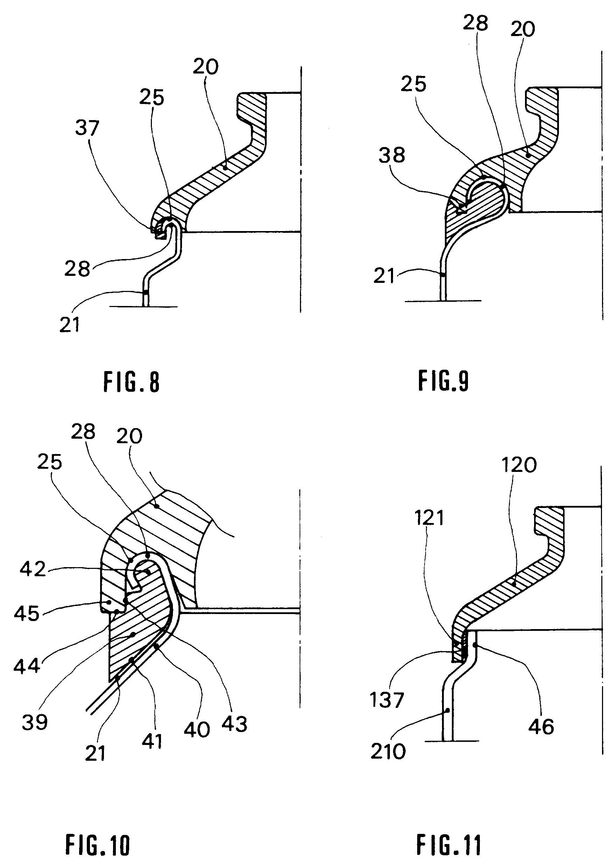

Diverses méthodes sont utilisables en fabrication de série pour la fixation étanche d'un dôme en plastique tel que 20 au boîtier multicouche. Elles sont commentées en relation avec les figures 8 à 10.

La figure 8 représente la fixation d'un dôme 20 de même géométrie que dans les trois premiers exemples, sur un boîtier identique 21 au boîtier de la figure 6 à l'aide d'une pièce annulaire de liaision 37 compatible à la fois avec la matière plastique du dôme 2 -ici du PE.HD- et celle du boîtier 21, et aussi avec l'Al pouvant être dénudé localement sur le bord roulé 28 de ce boîtier. Cette pièce 37 d'épaisseur 0,2mm est en complexe contenant la même polyoléfine que celle du dôme 20, c'est-à-dire du PE, et de l'EAA; son bord extérieur est encliqueté sur l'extrémité du bord roulé 28, et après la mise en place du dôme 20 venant s'appliquer par sa gorge circulaire 25 sur la pièce de liaison 37, le soudage est effectué par l'une des méthodes suivantes: par induction haute fréquence, par rotation, ou encore par ultrasons en modifiant la forme du dôme pour l'appui du transducteur ultrasonore.

Sur la figure 9 on voit que le dôme 20, mis en place par sa gorge circulaire 25 sur le bord roulé 28 du boîtier 21, a une extrémité de gorge circulaire 25 dépassant d'environ 1 mm l'extrémité du bord roulé 28, sans obstruer l'intérieur de ce bord roulé 28. Par injection annulaire de matière plastique de même nature que celle du dôme, ici du PE, on remplit au moins partiellement la cavité intérieure du bord roulé 28 en faisant fondre partiellement la jupe extérieure 38 du dôme 20 bordant l'extrémité de la gorge circulaire 25, cette jupe 25 ayant à cet endroit 1 mm d'épaisseur. On obtient une liaison soudée étanche de bonne qualité qui prolonge la jupe 38. De façon générale, l'extrémité 38 du dôme 20 ainsi solidarisée par le moulage doit venir au voisinage de l'extrémité du bord roulé, soit moins de 0,5mm avant cette extrémité ou un peu plus loin laissant au moins 1 mm de passage vers l'intérieur du bord roulé 28.

Le mode de fixation de la figure 10 utilise une pièce annulaire de forme 39 en matière plastique de même nature que celle du dôme 20, dont le haut n'est pas représenté, cette pièce 39 étant mise en place sur l'épaule ou portion rétreinte 40 du boîtier avant le roulage de son bord d'extrémité. Cette pièce 39, ici en PE comme le dôme 20, comporte une base 41 s'appuyant sur cette épaule 40 du boîtier 21, une portion supérieure 42 qui va être sertie comme représenté par le roulage 28 du bord d'extrémité supérieure du boîtier 21, ainsi que une ou plusieurs surfaces, ici les deux surfaces verticale 43 et horizontale 44, venant au contact de la jupe extérieure 45 du dôme 20. Les mises en place de la pièce de forme 39, du bord roulé 28 et du dôme 20 étant faites, la fixation étanche est effectuée par soudage par rotation des portées annulaires 43 et 44 contre la portion annulaire 45 du dôme 20. La fixation peut aussi être faite en soudage par induction HF ou par ultrasons.

### EXEMPLE 10 (figure 11) :

Dans cet exemple, le boîtier 210 a été obtenu comme les boîtiers 21 avec la bande multicouche et avec la gamme d'emboutissage-étirage de l'exemple 4, mais son extrémité supérieure 46 est ici rétreinte cylindriquement à 40 mm de diamètre extérieur.
Le dôme en matière plastique 120 comporte à son extrémité inférieure une jupe droite 121 dont la surface intérieure vient emboîter avec un jeu de 0,2mm au diamètre l'extrémité 46, la fixation étanche étant alors faite par collage.
On peut aussi utiliser entre la jupe droite 121 et l'extrémité rétreinte 46 un anneau de liaison 137 de même nature que l'anneau de liaison 37 de l'exemple 7 (figure 8), placé autour de l'extrémité 137 avant l'emboîtage de la jupe 121 du dôme 120, le soudage étant alors effectué par induction HF ou par rotation. Le diamètre intérieur de la jupe 121 du dôme 120 et l'épaisseur de l'anneau ou bracelet 137 sont choisis de façon à réaliser un léger serrage avant soudage.

### APPLICATIONS :

La bande multicouche de l'invention et les différents corps creux, récipients ou distributeurs qui l'utilisent, s'appliquent à des domaines variés tels que ceux de produits d'entretien, d'hygiène alimentaire, cosmétologiques et pharmaceutiques, la plupart de ces produits étant inertes vis-à-vis de sa couche intérieure de matière plastique.

## Revendications

1. Bande ou portion de bande (8;12) pour emboutissage-étirage utilisant un ou plusieurs outillages externes de conformation, comportant une couche métallique (5) portant sur une de ses faces une couche de vernis cuit (6) contenant un lubrifiant solide en particules (100), caractérisé en ce que:
a) ladite couche métallique (5) est en alliage d'aluminium et comporte sur chaque face une couche d'adhérence d'oxyde anodique ou de conversion chimique d'épaisseur comprise entre 20 nm et 80 nm;
b) lesdites particules (100) sont plus dures que le vernis (6) et moins dures que le ou lesdits outillages externes, et le rapport "diamètre moyen de ces particules / épaisseur du vernis" est supérieur à 1;
c) ladite couche métallique (5) porte sur son autre face (4) pourvue de ladite couche d'adhérence une couche superficielle (7;11) de matière plastique.

2. Bande ou portion de bande selon la revendication 1, dans laquelle chaque dite couche d'adhérence est en oxyde anodique d'épaisseur comprise entre 30 nm et 80 nm.

3. Bande ou portion de bande selon la revendication 2, dans laquelle chaque dite couche d'oxyde anodique est obtenue par anodisation phosphorique.

4. Bande ou portion de bande selon la revendication 1, dans laquelle ladite couche en alliage d'aluminium (5) comporte sur chaque face une couche de conversion chimique d'épaisseur comprise entre 20 nm et 60 nm.

5. Bande ou portion de bande (8;12) selon l'une quelconque des revendications 1 à 4, dans laquelle le diamètre moyen des particules (100) de lubrifiant solide est compris entre 1 et 30 µm.

6. Bande ou portion de bande (8;12) selon la revendication 5, dans laquelle la teneur pondérale en lubrifiant solide (100) dans le vernis (6) est comprise entre 0,1 et 10% et de préférence entre 0,5 et 5%.

7. Bande ou portion de bande (8;12) selon la revendication 6, dans laquelle le lubrifiant solide est constitué de particules (100) de PE de poids moléculaire supérieur à 100000 ou de PP ou de PTFE ou d'amide organique ou de mélange de ces particules.

8. Bande ou portion de bande (8;12) selon la revendication 1, dans laquelle ladite couche de matière plastique (7;11) est d'épaisseur comprise entre 15 µm et 100 µm et a un taux d'allongement supérieur à 200% dans toutes les directions.

9. Bande ou portion de bande (8;12) selon la revendication 8, dans laquelle ladite couche de matière plastique (7;11) comprend au moins une couche élémentaire contenant au moins 50% et jusqu'à 100% en poids de PE ou de PP ou de copolymère de PE ou de PP avec une autre polyoléfine, et au plus 50% en poids d'un copolymère acide obtenu à partir d'oléfines d'une part, d'acides ou d'anhydrides organiques insaturés d'autre part, et éventuellement d'esters insaturés.

10. Bande ou portion de bande selon la revendication 9, dans laquelle ladite couche de matière plastique (7;11) comporte plusieurs couches élémentaires de composition différente consistant en une couche barrière en PVDC ou EVOH ou polyamide suivie d'une couche adhésive et d'une couche à base de polyoléfine.

11. Bande ou portion de bande selon la revendication 8 dans laquelle ladite couche de matière plastique est en polyéthylène linéaire basse densité.

12. Bande ou portion de bande (8) selon une quelconque des revendications 8 à 10 comportant entre ladite couche métallique (5) et ladite couche de matière plastique (7) une couche adhésive (9) à base de polyuréthane d'épaisseur comprise entre 0,5 et 10 µm.

13. Bande ou portion de bande (12) selon une quelconque des revendications 8 à 10, comportant entre ladite couche métallique (5) et ladite couche de matière plastique (11) une couche adhésive (10) d'épaisseur comprise entre 1 µm et 20 µm et comportant plus de 50% et jusqu'à 100% en poids de copolymère acide et moins de 50% en poids de polyoléfines.

14. Bande ou portion de bande selon la revendication 8, dans laquelle ladite couche de matière plastique contient de 0,1 à 0,5% en poids d'éthylenebistéaramide.

15. Bande ou portion de bande (8;12) selon l'une quelconque des revendications 1 à 14 dans laquelle ladite couche de vernis (6) a une épaisseur comprise entre 1 et 8 µm et de préférence entre 2 et 5 µm.

16. Bande ou portion de bande selon la revendication 15, dans laquelle ledit vernis (6) est un vernis de composition faisant partie du groupe acrylique, epoxy-urée, organisol vinylique, époxy-phénolique, polyester.

17. Utilisation d'une bande ou portion de bande (8) selon l'une quelconque des revendications 1 à 16 pour la fabrication d'un corps creux ou récipient (21;210) par emboutissage ou emboutissage-étirage de ladite bande ou portion de bande (8), dans laquelle ladite couche de vernis (6) contenant ledit lubrifiant solide (100) est à l'extérieur dudit corps creux ou dudit récipient (21;210).

18. Utilisation selon la revendication 17, dans laquelle ledit emboutissage et/ou ledit emboutissage-étirage sont éxécutés sans lubrification des outillages extérieurs et en refroidissant ces outillages par aspersion d'eau.

19. Utilisation selon l'une quelconque des revendications 17 ou 18, dans laquelle le corps creux ou récipient obtenu (21;210) a un rapport H/D supérieur ou égal à 2,5 et typiquement compris entre 3 et 5, H étant sa hauteur et D son diamètre.

20. Utilisation selon la revendication 19, pour la fabrication de boîtes de conserve ou de boîtes boisson.

21. Utilisation selon la revendication 19, pour la fabrication de capsules de bouchage.

22. Utilisation selon la revendication 19, pour la fabrication d'un boîtier (21;210) du type aérosol.

23. Utilisation selon la revendication 22, dans laquelle on fabrique ensuite un corps de distributeur (19) par les étapes suivantes :
a) on prépare à l'extrémité supérieure (27;46) du boîtier obtenu (21;210) une portion de fixation consistant en un bord roulé (28) ou en une portion annulaire rétreinte droite (46) ;
b) on réalise ou on a réalisé un dôme annulaire (20;120) en matière plastique comportant un voile annulaire rigide (23) encadré par une extrémité annulaire supérieure renflée extérieurement (22) et portion d'extrémité inférieure plus large comportant des moyens de fixation (25;121) sur ladite portion de fixation (28;46) du boîtier (21;210) consistant soit en une gorge annulaire (25) emboîtant ledit bord roulé (28), soit une surface intérieure annulaire emboîtant ladite portion annulaire rétreinte droite (46) ;
c) on fixe ledit dôme annulaire (20;120) sur l'extrémité supérieure (27;46) dudit boîtier (21;210) par lesdits moyens de fixation (25 et 28 ; 121 et 46), par collage, par soudage, ou par scellage de matière plastique.

24. Utilisation selon la revendication 23, dans laquelle on fixe ensuite de façon étanche une valve de distribution d'un produit aérosol, ou une pompe (34) de distribution d'un liquide ou d'une crème, par sa collerette ou coupelle de fixation (33) sur ladite extrémité supérieure renflée extérieurement (22) dudit dôme annulaire (20).

25. Utilisation selon la revendication 24, dans laquelle on fixe sur ladite extrémité supérieure (22) dudit dôme annulaire (20) une pompe sans retour d'air (34) dont l'orifice d'aspiration est muni d'un tube plongeur (36).

26. Utilisation selon l'une quelconque des revendications 22 à 25, dans laquelle ledit récipient embouti ou embouti-étiré obtenu a un diamètre extérieur et une épaisseur satisfaisant aux correspondances suivantes :
. 0 33 mm à moins de 47 mm : épaisseur 0,15 à 0,20 mm
. 0 47 mm à moins de 55 mm : épaisseur 0,20 à 0,25 mm
. 0 55 mm à 80 mm : épaisseur 0,25 à 0,35mm.

## Claims

1. A strip or portion of a strip (8; 12) for deep drawing and ironing, employing one or more external shaping tools, comprising a metal layer (5) which carries on one of its surfaces a layer of fired varnish (6) containing a lubricant (100) which is solid and particulate, characterised in that:
a) said metal layer (5) consists of aluminium alloy and comprises on each surface an adhering layer of anodic oxide or chemical conversion oxide of a thickness of between 20 nm and 80 nm;
b) said particles (100) are harder than the varnish (6) and less hard than the external tool(s), and the "mean diameter of these particles / thickness of the varnish" ratio is greater than 1;
c) said metal layer (5) carries on the other surface (4) thereof, provided with said adhering layer, a surface layer (7; 11) of plastics material.

2. A strip or portion of a strip according to Claim 1, wherein each of said adhering layers consists of anodic oxide of a thickness of between 30 nm and 80 nm.

3. A strip or portion of a strip according to Claim 2, wherein each of said anodic oxide layers is obtained by phosphoric anodisation.

4. A strip or portion of a strip according to Claim 1, wherein said layer consisting of aluminium alloy (5) comprises, on each surface, a chemical conversion layer of a thickness of between 20 nm and 60 nm.

5. A strip or portion of a strip (8; 12) according to any one of Claims 1 to 4, wherein the mean diameter of the particles (100) of solid lubricant is between 1 and 30 µm.

6. A strip or portion of a strip (8; 12) according to Claim 5, wherein the content by weight of solid lubricant (100) in the varnish (6) is between 0.1 and 10%, and preferably between 0.5 and 5%.

7. A strip or portion of a strip (8; 12) according to Claim 6, wherein the solid lubricant is constituted by particles (100) of PE with a molecular weight in excess of 100000 or of PP or of PTFE or of organic amide or a mixture of these particles.

8. A strip or portion of a strip (8; 12) according to Claim 1, wherein said layer of plastics material (7; 11) is of a thickness of between 15 µm and 100 µm and has an elongation rate of more than 200% in all directions.

9. A strip or portion of a strip (8; 12) according to Claim 8, wherein said layer of plastics material (7; 11) comprises at least one elementary layer containing at least 50%, and up to 100%, by weight, of PE or of PP or of PE or PP copolymer with another polyolefin, and, at most, 50% by weight of an acid copolymer obtained from olefins, on the one hand, and from unsaturated organic acids or anhydrides, on the other hand, and possibly unsaturated esters.

10. A strip or portion of a strip according to Claim 9, wherein said layer of plastics material (7; 11) comprises a plurality of elementary layers of varying composition consisting of a barrier layer of PVDC or EVOH or polyamide followed by an adhesive layer and a polyolefin-based layer.

11. A strip or portion of a strip according to Claim 8, wherein said layer of plastics material consists of low density linear polyethylene.

12. A strip or portion of a strip (8) according to any one of Claims 8 to 10, comprising between said metal layer (5) and said layer of plastics material (7) a polyurethane-based adhesive layer (9) of between 0.5 and 10 µm.

13. A strip or portion of a strip (12) according to any one of Claims 8 to 10, comprising between said metal layer (5) and said layer of plastics material (11) an adhesive layer (10) of a thickness of between 1 µm and 20 µm and comprising more than 50% and up to 100% by weight of acid copolymer and less than 50% by weight of polyolefins.

14. A strip or portion of a strip according to Claim 8, wherein said layer of plastics material contains from 0.1 to 0.5% by weight of ethylene bistearamide.

15. A strip or portion of a strip (8; 12) according to any one of Claims 1 to 14, wherein said layer of varnish (6) is of a thickness of between 1 and 8 µm, and preferably of between 2 and 5 µm.

16. A strip or portion of a strip according to Claim 15, wherein said varnish (6) is a varnish of a composition which is part of the following group: acrylic, epoxy-urea, vinyl organosol, epoxy phenol, polyester.

17. Use of a strip or portion of a strip (8) according to any one of Claims 1 to 16 for producing a hollow body or receptacle (21; 210) by drawing or drawing and ironing said strip or portion of a strip (8), wherein said layer of varnish (6) containing said solid lubricant (100) is outside said hollow body or said receptacle (21; 210).

18. Use according to Claim 17, wherein said drawing and/or said drawing and ironing operations are carried out without lubrication of the external tools and by cooling the tools by means of sprayed water.

19. Use according to either Claim 17 or Claim 18, wherein the hollow body or receptacle obtained (21; 210) has an H/D ratio which is greater than or equal to 2.5, and which is typically between 3 and 5, H being its height and D being its diameter.

20. Use according to Claim 19, for the manufacture of tins for preserved food or drinks cans.

21. Use according to Claim 19, for the manufacture of closure caps.

22. Use according to Claim 19, for the manufacture of an aerosol type container (21; 210).

23. Use according to Claim 22, wherein a dispenser body (19) is then manufactured by way of the following steps :
a) at the upper end (27; 46) of the container obtained (21; 210) a fixing portion is prepared which consists of a rolled edge (28) or a straight necked annular portion (46);
b) an annular dome (20; 120) of plastics material is produced, or is produced beforehand, which comprises a rigid annular shell (23) framed by an externally bulging upper annular end (22) and a bottom end portion which is wider and which comprises fixing means (25; 121) on said fixing portion (28; 46) of the container (21; 210) consisting either of an annular groove (25) which fits over said rolled edge (28), or of an inner annular surface which fits over said straight necked annular portion (46);
c) said annular dome (20; 120) is fixed over the upper end (27; 46) of said container (21; 210) by said fixing means (25 and 28; 121 and 46) by gluing, welding or by sealing the plastics material.

24. Use according to Claim 23, wherein a valve for dispensing an aerosol product or a pump (34) for dispensing a liquid or cream is then fitted in seal-tight manner by its fixing collar or cup (33) onto said externally bulging upper end (22) of said annular dome (20).

25. Use according to Claim 24, wherein a pump (34) with no facility for air return is fixed to said upper end (22) of said annular dome (20), the intake orifice of which pump is equipped with a plunger tube (36).

26. Use according to any one of Claims 22 to 25, wherein said drawn or drawn and ironed receptacle obtained has an external diameter and a thickness which satisfy the following relationships:
. ⌀ 33 mm to less than 47 mm : thickness 0.15 to 0.20 mm
. ⌀ 47 mm to less than 55 mm : thickness 0.20 to 0.25 mm
. ⌀ 55 mm to 80 mm : thickness 0.25 to 0.35 mm.

## Patentansprüche

1. Band oder Bandabschnitt (8; 12) zum Tiefziehen-Streckziehen unter Verwendung eines oder mehrerer äußerer Formgebungswerkzeuge, mit einer Metallschicht (5), die auf ihrer einen Fläche eine eingebrannte Lackschicht (6) trägt, die ein Feststoff-Schmiermittel in Form von Partikeln (100) enthält, dadurch **gekennzeichnet**, daß:
a) die genannte Metallschicht (5) aus einer Aluminiumlegierung besteht und auf jeder Fläche eine aus anodischer Oxydierung oder chemischer Umwandlung gebildete Haftschicht aufweist, mit einer Dicke, die zwischen 20 nm und 80 nm liegt;
b) die genannten Partikel (100) härter sind als der Lack (6) und weniger hart sind als das oder die äußeren Werkzeuge, und das Verhältnis _{"}mittlerer Durchmesser dieser Partikel/Dicke des Lacks" größer ist als 1; und
c) die genannte Metallschicht (5) auf ihrer anderen Fläche (4), die mit der genannten Haftschicht versehen ist, eine Oberflächenschicht (7; 11) aus Kunststoff trägt.

2. Band oder Bandabschnitt nach Anspruch 1, worin die genannte Haftschicht aus anodischem Oxid besteht, mit einer Dicke, die zwischen 30 nm und 80 nm liegt.

3. Band oder Bandabschnitt nach Anspruch 2, worin die genannte Schicht aus anodischem Oxid durch phosphorische Anodisierung erhalten ist.

4. Band oder Bandabschnitt nach Anspruch 1, worin die genannte Schicht aus Aluminiumlegierung (5) auf jeder Fläche eine durch chemische Umwandlung erhaltene Schicht aufweist, mit einer Dicke, die zwischen 20 nm und 60 nm liegt.

5. Band oder Bandabschnitt (8; 12) nach irgendeinem der Ansprüche 1 bis 4, worin der mittlere Durchmesser der Partikel (100) aus festem Schmiermittel zwischen 1 und 30 µm liegt.

6. Band oder Bandabschnitt (8; 12) nach Anspruch 5, worin der Gewichtsanteil an festem Schmiermittel (100) im Lack (6) zwischen 0,1 und 10% und bevorzugt zwischen 0,5 und 5% liegt.

7. Band oder Bandabschnitt (8; 12) nach Anspruch 6, worin das feste Schmiermittel aus Partikeln (100) aus PE mit einem Molekulargewicht über 100.000 oder aus PP oder PTFE oder einem organischen Amid oder einer Mischung dieser Partikel besteht.

8. Band oder Bandabschnitt (8; 12) nach Anspruch 1, worin die genannte Kunststoffschicht (7; 11) eine Dicke aufweist, die zwischen 15 µm und 100 µm liegt, sowie einem Streckgrad, der in allen Richtungen größer ist als 200%.

9. Band oder Bandabschnitt (8; 12) nach Anspruch 8, worin die genannte Kunststoffschicht (7; 11) mindestens eine Elementarschicht aufweist, die mindestens 50 Gew.-% und bis zu 100 Gew.-% an PE oder PP oder einem Copolymer von PE oder PP mit einem anderen Polyolefin aufweist, und höchstens 50 Gew.-% eines sauren Copolymers enthält, das einerseits aus Polyolefinen und andererseits aus organischen oder anhydriden, ungesättigten Säuren sowie schließlich ungesättigten Estern erhalten wurde.

10. Band oder Bandabschnitt nach Anspruch 9, worin die genannte Kunststoffschicht (7; 11) mehrere Elementarschichten aus einer unterschiedlichen Zusammensetzung aufweist, die aus einer Sperrschicht aus PVDC oder EVOH oder Polyamid besteht, gefolgt von einer Haftschicht und einer Schicht auf Polyolefinbasis.

11. Band oder Bandabschnitt nach Anspruch 8, worin die genannte Kunststoffschicht aus linearem Polyethylen niedriger Dichte besteht.

12. Band oder Bandabschnitt (8) nach irgendeinem der Ansprüche 8 bis 10, wobei sie zwischen der genannten Metallschicht (5) und der genannten Kunststoffschicht (7) eine Haftschicht (9) auf Polyurethanbasis mit einer Dicke aufweist, die zwischen 0,5 und 10 µm liegt.

13. Band oder Bandabschnitt (12) nach irgendeinem der Ansprüche 8 bis 10, wobei sie zwischen der genannten Metallschicht (5) und der genannten Kunststoffschicht (11) eine Haftschicht (10) aufweist, mit einer Dicke, die zwischen 1 µm und 20 µm liegt, und mehr als 50 Gew.-% und bis zu 100 Gew.-% an saurem Copolymer sowie höchstens 50 Gew.-% an Polyolefinen aufweist.

14. Band oder Bandabschnitt nach Anspruch 8, worin die genannte Kunststoffschicht 0,1 bis 0,5 Gew.-% an Ethylenbistearamid enthält.

15. Band oder Bandabschnitt (8; 12) nach irgendeinem der Ansprüche 1 bis 14, worin die genannte Lackschicht (6) eine Dicke aufweist, die zwischen 1 und 8 µm sowie bevorzugt zwischen 2 und 5 µm beträgt.

16. Band oder Bandabschnitt nach Anspruch 15, worin der genannte Lack ein Kompositlack ist, der zur Acrylgruppe, Organosol-Vinylgruppe, Epoxy-Phenolgruppe, Polyestergruppe gehört.

17. Verwendung eines Bandes oder Bandabschnitts (8) nach irgendeinem der Ansprüche 1 bis 16 für die Herstellung eines Hohlkörpers oder Behälters (21; 210) durch Tiefziehen oder Tiefziehen-Streckziehen des genannten Bandes oder Bandabschnitts (8), worin die genannte Lackschicht (6), die das genannte feste Schmiermittel (100) enthält, sich an der Außenseite des genannten Hohlkörpers oder des Behälters (21; 210) befindet.

18. Verwendung nach Anspruch 17, worin das genannte Tiefziehen oder das genannte Tiefziehen-Streckziehen ohne Schmierung in außenliegenden Werkzeugen und unter Abkühlung dieser Werkzeuge durch Besprengung mit Wasser ausgeführt werden.

19. Verwendung nach irgendeinem der Ansprüche 17 oder 18, worin der erhaltene Hohlkörper oder Behälter (21; 210) ein Verhältnis von H/D von mehr oder gleich 2,5 aufweist, dieses in typischer Weise zwischen 3 und 5 liegt und H seine Höhe sowie D sein Durchmesser sind.

20. Verwendung nach Anspruch 19 für die Herstellung von Konservendosen oder Getränkedosen.

21. Verwendung nach Anspruch 19 für die Herstellung von Verschlußkapseln.

22. Verwendung nach Anspruch 19 für die Herstellung eines Aerosolbehälters (21; 210).

23. Verwendung nach Anspruch 22, worin man anschließend einen Spenderkörper (19) durch die folgenden Schritte herstellt:
a) man bereitet am oberen Ende (27; 46) des erhaltenen Behälters (21; 210) einen Befestigungsabschnitt vor, der aus einem eingerollten Rand (28) oder einem ringförmigen, eingeschnürten, geraden Abschnitt (46) besteht;
b) man stellt eine ringförmige Haube (20; 120) aus Kunststoff her oder hat sie hergestellt, die eine starre, ringförmige Abdeckung (23) aufweist, die durch ein oberes, ringförmiges Ende, das an der Außenseite mit einem Wulst (22) versehen ist, sowie einen unteren, größeren Endabschnitt eingerahmt ist, der Mittel (25; 121) zur Befestigung auf dem genannten Befestigungsabschnitt (28; 46) des Behälters (21; 210) aufweist, die entweder aus einer Ringnut (25) bestehen, die den genannten, eingerollten Rand (28) einschließt, oder aus einer ringförmigen Innenfläche, die den genannten ringförmigen, eingeschnürten, geraden Abschnitt (46) einschließt;
c) man befestigt die ringförmige Haube (20; 120) auf dem oberen Ende (27; 46) des genannten Behälters (21; 210) durch die genannten Befestigungsmittel (25 und 28; 121 und 46) durch Verklebung, durch Verschweißung oder durch Ausgießen mit Kunststoff.

24. Verwendung nach Anspruch 23, worin man dann ein Ventil zur Verteilung eines Aerosolproduktes oder eine Spenderpumpe (34) für eine Flüssigkeit oder eine Creme mit ihrem Befestigungsflansch oder ihrer Befestigungsschale dicht (33) auf dem genannten oberen, mit einem Außenwulst (22) versehenen Ende der genannten ringförmigen Haube (20) befestigt.

25. Verwendung nach Anspruch 24, worin man auf dem genannten oberen Ende (22) der genannten ringförmigen Haube (20) eine Ein-Richtungs-Luftpumpe (34) befestigt, deren Ansaugöffnung mit einem Tauchrohr (36) versehen ist.

26. Verwendung nach irgendeinem der Ansprüche 22 bis 25, worin der genannte, tiefgezogene oder tief-streckgezogene Behälter mit einem Außendurchmesser und einer Dicke erhalten wird, die den folgenden Zuordnungen genügen:
33 mm bis mindestens 45 mm: Dicke 0,15 bis 0,20 mm
47 mm bis mindestens 45 mm: Dicke 0,20 bis 0,25 mm
55 mm bis 80mm: Dicke 0,25 bis 0,35 mm
